# EUROPEAN PATENT APPLICATION

(11) **EP 4 606 669 A1**
(43) Date of publication of application: **27.08.2025**
(21) Application number: 24159138.7
(22) Date of filing: 22.02.2024
(51) Int. Cl.: B60W 30/16

(54) **FOLLOWING DISTANCE CONTROL SYSTEM FOR A MOTOR VEHICLE**

(71) Applicant: KNORR-BREMSE Systeme für Nutzfahrzeuge GmbH, 80809 München (DE)
(72) Inventor: HUBER, Christoph, 80333 München (DE); HECKER, Falk, 71706 Markgröningen (DE)

(57) **Abstract**

The invention relates to a following distance control system for a motor vehicle (1), which is designed and set up to control at least one following distance (d) of the motor vehicle (1) in relation to a vehicle in front (2) to a target following distance (d₀) without intervention by a driver of the motor vehicle (1), comprising: a sensor system (3, 7, 9), which is designed and set up to detect at least one actual following distance (d) of the motor vehicle (1) in relation to the vehicle in front (2) in a detection range and to generate a distance signal (Sd) as a function thereof, an electronic control (5), which is designed and set up to evaluate at least a distance signal (Sd) and to generate a control signal (S) for a drive device and/or a braking device of the motor vehicle (1) at least as a function thereof, in order to regulate the detected following distance (d) to the target following distance (d₀), the electronic control system (5) furthermore being set up and designed in order to take into account at least one further signal (Sk; S_{GPS}), which is generated by the sensor system (3, 7, 9), wherein the sensor system (3, 7, 9) is set up and designed to generate this at least one further signal (Sk, S_{GPS}) as a function of a dynamic behavior of the vehicle in front (2), which differs from a purely longitudinal dynamic of the vehicle in front (2), and/or as a function of a state of the vehicle in front (2), which differs from the dynamic behavior of the vehicle in front (2), and/or as a function of an activation of at least one lighting device (8) of the vehicle in front (2).

## Description

The invention relates to a following distance control system for a motor vehicle, which is designed and set up to control at least a following distance of the motor vehicle in relation to a vehicle in front without intervention by a driver of the motor vehicle, according to the preamble of claim 1 and a driver assistance system or an autopilot system according to the preamble of claim 12.

A generic following distance control system is known from the prior art, e.g. from DE19943611A1, as a component of an adaptive cruise control (ACC). Depending on the driving speed, a target distance or a target time gap is determined in relation to a vehicle in front, whereby the distance control takes into account a minimum distance or a minimum time gap that can be specified by the driver when determining the target distance or the target time gap. In poor visibility conditions (bad weather, darkness), the known distance control increases the target distance or the target time gap determined for normal visibility conditions.

The invention is based on the object of extending a following distance control system in such a way that it reacts more flexibly in terms of road safety. A driver assistance system or an autopilot system with such a following distance control system is also to be made available.

This object is solved by the features of claims 1 and 12.

### Disclosure of the invention

The invention discloses a following distance control system for a motor vehicle, which is designed and set up to control at least one following distance of the motor vehicle in relation to a vehicle in front without intervention by a driver of the motor vehicle, comprising:
a) a sensor system which is designed and set up to detect at least one actual following distance of the motor vehicle in relation to the vehicle in front in a detection range and to generate a distance signal as a function thereof,
b) an electronic control system which is designed and set up to evaluate at least the distance signal and to generate a control signal for a drive device and/or a braking device of the motor vehicle at least as a function thereof, in order to adjust the detected following distance to a target following distance, wherein
c) the electronic control system is furthermore set up and designed in order to evaluate or to take into account, in addition to the distance signal, at least one further signal which is generated by the sensor system when generating the control signal and/or when determining the target following distance, the sensor system being set up and designed in order to generate
d) this further signal
   d1) as a function of a dynamic behavior of the vehicle in front, where this dynamic behavior particularly differs from a purely longitudinal dynamic of the vehicle in front, and/or
   d2) depending on a state or a condition of the vehicle in front, where this state or condition particularly differs from the dynamic behavior and the purely longitudinal dynamic of the vehicle in front, or differs from a longitudinal, transverse and vertical dynamic behavior of the vehicle in front, and/or
   d3) depending on an activation of at least one lighting device of the vehicle in front, and
e) if the taking into account or the evaluation of the further signal by the electronic control shows that
   e1) the dynamic behavior deviates significantly from an expected dynamic behavior of the vehicle in front, and/or
   e2) the state or condition deviates significantly from an expected state or condition of the vehicle in front, and/or
   e3) the at least one lighting device of the vehicle in front has been activated,
f) the electronic control is also set up and designed to adapt the control signal.

The fact that the dynamic behavior of the vehicle in front particularly differs from a purely longitudinal dynamic means that purely longitudinal dynamic of the vehicle in front is excluded, such as conventional adaptive cruise control (ACC). In particular, the electronic control analyzes the dynamic behavior of the vehicle in front, which differs from the purely longitudinal dynamic of the vehicle in front, which includes the control of the following distance or is formed by this control.

The purely longitudinal dynamic is determined in particular exclusively by variables and parameters such as distance, speed, acceleration, jerk, etc. measured in the direction of travel or in the direction of the vehicle's longitudinal axis. The purely longitudinal dynamic behavior is to be excluded from the dynamic behavior of the vehicle in front in order to distinguish it from a known distance control system of the state of the art, which only reacts to purely longitudinal dynamic variables such as the following distance between the vehicle and the vehicle in front. On the other hand, the dynamic behavior of the vehicle in front should particularly include the lateral dynamic behavior or a combination of longitudinal and lateral dynamic behavior in order to form the starting point for the adaptation of the control signal for distance control in the event of a significant deviation from an expected lateral dynamic behavior or from an expected combination of longitudinal and lateral dynamic behavior of the vehicle in front.

The longitudinal dynamic of the vehicle in front characterizes the dynamic behavior seen in the direction of the vehicle's longitudinal axis and the lateral dynamic behavior characterizes the dynamic behavior of the vehicle in front seen perpendicular to the vehicle's longitudinal axis.

Furthermore, the dynamic behavior of the vehicle in front may deviate or differ from a disappearance of the vehicle in front from the detection range of the sensor system. This can occur, for example, if the vehicle in front leaves the lane in which the vehicle is moving.

For example, the dynamic behavior of the vehicle in front, as defined above, deviates significantly from an expected dynamic behavior of the vehicle in front if the vehicle in front
a) rotates significantly about its vertical axis and then, for example, lurches and/or skids, and/or
b) rotates significantly about its longitudinal axis and then, for example, rolls, and/or
c) rotates significantly about its transverse axis and then, for example, pitches significantly, and/or
d) deviates significantly from an expected trajectory, particularly transverse to the longitudinal direction of the vehicle in front.

These cases do not essentially concern purely longitudinal dynamic changes in the behavior of the vehicle in front.

A significant deviation can mean that the deviation exceeds at least one threshold value, in particular one that can be parameterized or adjusted. In the event of a significant rotation of the vehicle in front
- about its vertical axis (yawing), this can mean that a (lower) threshold value for the yaw rate or yaw speed is exceeded by the yaw rate or yaw speed of the vehicle in front,
- about its longitudinal axis (rolling), this can mean that the rolling rate or rolling speed of the vehicle in front exceeds a (lower) threshold value for the rolling rate or rolling speed,
- about its transverse axis (pitching), this can mean that the pitch rate or pitching speed of the vehicle in front exceeds a lower threshold value for the pitch rate or pitching speed.

Of course, any combination of significant yawing, rolling and/or pitching is also possible in order to detect a significant deviation of the dynamic behavior of the vehicle in front from an expected dynamic behavior.

The expected dynamic behaviour of the vehicle in front can then be characterized in particular by the fact that
- the yaw rate or yaw speed of the vehicle in front does not exceed the (lower) threshold value for the yaw rate or yaw speed, and
- the rolling rate or rolling speed of the vehicle in front does not exceed the (lower) threshold value for the rolling rate or rolling speed, and
- the pitch rate or pitch speed of the vehicle in front does not exceed the (lower) threshold value for the pitch rate or pitch speed.

An expected trajectory can include, for example, the course of a roadway as detected by the vehicle's sensors or defined using external GPS signals received by a GPS receiver, which are evaluated by the electronic control, for example.

Alternatively, or additionally, the expected trajectory can correspond to a trajectory stored in the electronic control system and to be followed by the motor vehicle, which has been used as the target trajectory, for example, during autonomous driving of the motor vehicle. This approach is based on the idea that the vehicle in front must also follow this target trajectory, especially if the target trajectory does not have a junction in the area of a current position of the vehicle in front where the vehicle in front could branch off from the target trajectory.

If it is then determined that the vehicle in front deviates significantly from the expected trajectory particularly perpendicular to the longitudinal direction of the vehicle in front and, for example, moves towards the outer edge of the curve or exceeds it, this indicates an imminent accident situation. It is then necessary to adjust the control signal for the drive and/or the braking device of the motor vehicle, in particular to decelerate the motor vehicle and thereby increase the target following distance in the interests of greater road safety.

According to a further embodiment, the dynamic behavior of the vehicle in front can be detected by the electronic control system as deviating significantly from the expected dynamic behavior of the vehicle in front if a significant relative movement of a part of the vehicle in front in relation to at least one other part of the vehicle in front is detected by the sensor system. This significant relative movement can, in particular, be a significant relative movement of a trailer vehicle part in relation to a towing vehicle part of the vehicle in front.

According to a further embodiment, the electronic control can evaluate or recognize the state as deviating significantly from the expected state of the vehicle in front if by the sensor system detects
a) a smoke development on at least one part or section of the vehicle in front, in particular on a part or section of at least one brake actuator, and/or
b) at least one dimension of the vehicle in front that exceeds a threshold value, and/or
c) a relative movement of a load in relation to a loading area or to a loading space of the vehicle in front.

Particularly in the case of vehicles in front, which are designed to transport a heavy load, a dimension, in particular the width (transverse to the longitudinal direction of the vehicle) and/or the height (in the vertical direction) of the vehicle driving in front, can represent such a dimension, which exceeds a threshold value.

Particularly preferably, the activation of the at least one lighting device of the vehicle in front can include at least the following:
a) activation of a direction indicator of the vehicle in front, and/or
b) activation of the hazard warning lights of the vehicle in front, and/or
c) activation of a brake light of the vehicle in front.

This is because the activation of such a lighting device or of such lighting devices can represent a critical situation in which it may be necessary to adapt the control signal, for example to decelerate the motor vehicle in anticipation.

In principle, the electronic control can adapt the control signal in such a way that the motor vehicle is decelerated in order to increase the target following distance from the original target following distance. Alternatively, the electronic control can also adapt the control signal in such a way that the motor vehicle is accelerated in order to reduce the target following distance from the original target following distance.

During distance control, a significant deviation can also be detected if at least one threshold value is exceeded, which is stored in the electronic control, for example.

The threshold value can be
a) a fix value, or
b) adapted by the electronic control depending on
   b1) a speed and/or an acceleration of the motor vehicle, and/or
   b2) a coefficient of friction of the roadway, and/or
   b3) a visual range starting from the motor vehicle.

The sensor system can also include at least the following: A lidar sensor, a radar sensor, an ultrasonic sensor, a camera sensor, a GPS receiver which, depending on an external GPS signal, defines, for example, a roadway or a target trajectory or a target trajectory on which the motor vehicle and the vehicle in front are moving. As already explained above, a significant deviation of the (actual) trajectory from the expected or target trajectory of the vehicle in front can then be detected, in particular transverse to the longitudinal direction of the vehicle.

In order to be able to detect the significant deviations mentioned, expected or target values and/or value ranges for
a) the expected dynamic behavior, and/or for
b) the expected status of the vehicle in front
can be stored in the electronic control.

The invention also relates to a driver assistance system or an autopilot system for a motor vehicle which has a following distance control system as described above, in particular an adaptive cruise control (ACC), as well as a motor vehicle with such a driver assistance system or autopilot system. A driver assistance system or autopilot system is to be understood in particular as a system with which the motor vehicle is controlled or regulated at least semi-autonomously or fully autonomously, in particular within the framework of level 1 to level 5.

### Drawing

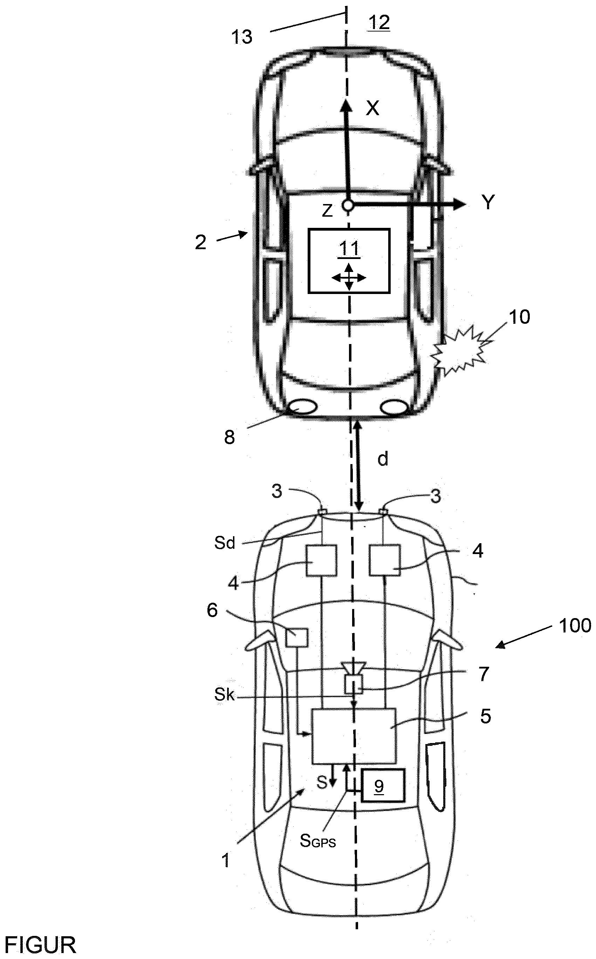

One preferred example of the invention is shown below in the drawing and explained in more detail in the following description. In the drawing, the only figure shows a schematic top view of a traffic situation in which a motor vehicle equipped with a preferred embodiment of a following distance control system according to the invention follows a vehicle at a following distance.

### Description of an example

In the traffic situation shown in the figure, a motor vehicle 1 equipped with a preferred embodiment of a following distance control system 100 follows a vehicle in front 2 at a following distance d. The distance following control system 100 forms here, for example, a component of adaptive cruise control (ACC), with which the motor vehicle 1 is equipped. Although shown in simplified form as a passenger car in the figure, the motor vehicle 1 and/or the vehicle 2 in front can be formed by a heavy-duty commercial vehicle, in particular as a towing vehicle-trailer combination or as a towing vehicle designed and equipped for towing a trailer.

The following distance control system 100 comprises a sensor system which is designed and set up to detect at least the following distance d of the motor vehicle 1 in relation to the vehicle in front 2 in or within a detection area and to generate a distance signal Sd depending on the following distance d. This sensor system comprises, for example, two radar sensors 3, which are arranged on a front surface of the motor vehicle 1 and each feed a distance signal Sd representing the actual following distance d of the motor vehicle 1 in relation to the vehicle in front 2 into a signal conditioning device 4, in which the distance signal Sd is conditioned, where the conditioned distance signal Sd is fed into an electronic control 5 for processing.

The electronic control 5 is designed and set up to evaluate at least the (conditioned) distance signal Sd and, at least depending on the distance signal Sd, to generate a control signal S for a drive device not shown here and/or for a braking device of the motor vehicle 1 in order to produce, for example, a preset target following distance d₀. If, for example, a parameterizable target following distance d₀ has been set or predefined in the motor vehicle, as is the case here, the following distance control system 100 uses the control signal S to ensure that this target following distance d₀ is adjusted, either by an acceleration caused by the control signal S by increasing the power of the drive device or by a deceleration caused by the control signal S by reducing the power of the drive device and/or by activating the braking device.

Furthermore, the motor vehicle 1 also has wheel speed sensors 6 particularly on all wheels, shown here in simplified form as a box, whose wheel speed signals are processed in the electronic control 5, for example to determine a speed v and an acceleration/deceleration a of the motor vehicle 1. Further, the motor vehicle van be equipped with a brake-slip control (ABS), to avoid excessive brake slip when braking, where the brake-slip control (ABS) uses the wheel speed signals as input signals.

Furthermore, the motor vehicle 1 is equipped with a camera 7 as part of the sensor system, which generates a camera image signal Sk and feeds it into the electronic control 5 for evaluation. This evaluation is realized by an implemented software and also includes an analysis of the dynamic behaviour of the vehicle in front 2. In particular, dynamic behavior of the vehicle in front 2 is also analyzed, which differs from the purely longitudinal dynamics of the vehicle in front 2, which comprises the control of the following distance d described above or is formed by it.

From a coordinate system X, Y, Z of the vehicle in front 2, the X direction extends parallel or coaxially in relation to a longitudinal axis of the vehicle in front 2 and the Y direction transverse to it. The Z direction of the coordinate system X; Y, Z runs vertically.

The longitudinal dynamics of the vehicle in front 2 then relate to driving variables or driving parameters that act in the X direction or in the direction of the vehicle's longitudinal axis, such as the speed vₓ or the acceleration/deceleration aₓ active in the X direction. This longitudinal dynamics can, for example, be detected by both the radar sensors 3 and the camera 7 and then evaluated as part of the following distance control system 100 as described above. Here, for example, the camera image signal Sk generated by the camera 7 is used in the electronic control 5 to particularly analyze the lateral dynamic behaviour of the vehicle 2 in front, in this case in the Y direction, transverse to the X direction or transverse to the longitudinal axis of the vehicle in front 2, and particularly also the vertical dynamic behaviour of the vehicle in front 2, in this case in the Z direction.

Furthermore, the electronic control 5 is set up and designed here, for example, to analyze the state of the vehicle in front 2 using the camera image signal Sk generated by the camera 7. This state of the vehicle in front 2 preferably differs from the (longitudinal, transverse and vertical) dynamic behavior described above or differs from driving parameters and driving variables of the vehicle in front 2 that describe the dynamics of the vehicle in front 2 itself, such as the driving speed v and/or the acceleration a in the X, Y and Z directions. The state of the vehicle in front 2 should rather be the state in which the vehicle in front 2 was already before the journey (e.g. a load of the vehicle in front 2 being not secured) or which only occurs during the course of the journey (e.g. a load of the vehicle in front 2 slipping on a loading surface, smoking brake actuators of the vehicle in front 2, parts of the vehicle in front 2 coming loose).

Last but not least, due to the implemented software, the electronic control 5 is also set up and designed here, for example, to detect an activation of at least one lighting device 8 of the vehicle 2 in front by evaluating the camera image signal Sk generated by the camera 7.

If the evaluation of the camera image signal Sk by the electronic control 5 shows that the dynamic behavior of the vehicle 2 in front deviates significantly from an expected dynamic behavior of the vehicle 2 in front, and/or the state of the vehicle 2 in front deviates significantly from an expected state of the vehicle 2 in front, and/or the at least one lighting device 8 of the vehicle 2 in front has been activated, the electronic control 5 is set up and designed using the implemented software to adapt the control signal S, here in particular in the sense of a deceleration of the motor vehicle 1.

For example, the dynamic behavior of the vehicle in front 2, as defined above, deviates significantly from an expected dynamic behavior of the vehicle in front 2, if the vehicle 2 in front 2
a) rotates significantly about its vertical axis (here: Z-direction or Z-axis in the coordinate system X, Y, Z) and then, for example, significantly skids and/or oversteers and/or understeers, and/or
b) rotates significantly about its longitudinal axis (here: X-direction or X-axis in the coordinate system X, Y, Z) and then, for example, rolls significantly, and/or
c) rotates significantly about its transverse axis (here: Y-direction or Y-axis in the coordinate system X, Y, Z) and then, for example, pitches significantly, and/or
d) deviates significantly from an expected or target trajectory 13, particularly transverse to the vehicle's longitudinal axis or X-direction.

A significant deviation can mean that the deviation exceeds at least one threshold value, in particular one that can be parameterized or adjusted. In the event of a significant rotation of the vehicle in front 2
- around its vertical axis (yaw), this can mean that the yaw rate or yaw speed of the vehicle in front exceeds a lower threshold value for the yaw rate or yaw speed,
- around its longitudinal axis (rolling), this can mean that the rolling rate or rolling speed of the vehicle in front exceeds a lower threshold value for the rolling rate or rolling speed,
- around its transverse axis (pitching), this can mean that the pitch rate or pitching speed of the vehicle in front exceeds a lower threshold value for the pitch rate or pitching speed.

Of course, any combination of significant yaw, roll and/or pitch is also possible in order to detect a significant deviation of the dynamic behavior of the vehicle in front from an expected dynamic behavior.

The expected dynamic behaviour of the vehicle in front can then be characterized in particular by the fact that
- the yaw rate or yaw speed of the vehicle in front does not exceed the lower threshold value for the yaw rate or yaw speed, and
- the rolling rate or rolling speed of the vehicle in front does not exceed the lower threshold value for the rolling rate or rolling speed, and
- the pitch rate or pitch speed of the vehicle in front does not exceed the lower threshold value for the pitch rate or pitch speed.

An expected or target btrajectory can, for example, include the course of a roadway as detected by the camera 7 of the motor vehicle 1 or defined using external GPS signals S_{GPS} received by a GPS receiver 9, which are evaluated by the electronic control 5, for example.

Alternatively, or additionally, the expected or target trajectory 13 can correspond to a trajectory stored in the electronic control 5 and automatically followed by the motor vehicle 1, which has been used as the target trajectory 13, for example, as part of an autonomous drive of the motor vehicle 1. This approach is based on the idea that the vehicle in front 2 must also follow this target trajectory 13, especially if the target trajectory does not have a junction in the area of a current position of the vehicle in front 2 where the vehicle in front 2 could branch off from the target trajectory.

As an alternative, the motor vehicle 1 as well as the vehicle in front 2 can be equipped with a vehicle-to-vehicle (V2V) communication system each. In this case, the expected or target trajectory 13 which can be present in a control unit of the vehicle in front 2 can be transferred to the electronic control 5 of the motor vehicle 1 also by the vehicle-to-vehicle (V2V) communication, so that the target trajectory 13 of the vehicle in front 2 is present in the electronic control 5 of the motor vehicle 1 to be compared it with an actual trajectory of the vehicle in front 2 that is detected by the camera 7, for example.

If then, for example, the camera image signal Sk is used by the electronic control 5 to determine that the vehicle in front 2 deviates significantly from the expected or target trajectory 13 particularly transverse to the longitudinal axis of the vehicle in front 2 or here in the Y direction and, for example, moves towards the outer limit of a curve of the roadway 12 or even exceeds this limit, this indicates an imminent accident situation. It is then necessary to adjust the control signal S for the drive and/or the braking device of the motor vehicle 1, in particular to decelerate the motor vehicle 1 and thereby increase the target following distance d₀ in the interests of greater road safety.

According to a further embodiment, the electronic control 5 can detect the dynamic behavior of the vehicle in front 2, which is recorded here in particular by the camera 7, as deviating significantly from the expected dynamic behavior of the vehicle in front 2 if a significant relative movement of a part or section of the vehicle in front 2 is detected in relation to at least one other part or section of the vehicle in front 2.

For example, a significant relative movement of a trailer vehicle part in relation to a towing vehicle part of the vehicle 2 in front can trigger the control signal S to be adjusted by the electronic control 5. The relative movement can, for example, be assessed as significant if an articulation angle between the towing vehicle part and the trailer vehicle part of the vehicle in front 2 exceeds an articulation angle threshold value. This articulation angle can, for example, be determined or estimated using an evaluation of the camera signal Sk in the electronic control 5, as the motor vehicle 1 generally follows the vehicle 2 in front in an alignment and a the articulation angle of the trailer vehicle part in relation to the towing vehicle part can then be detected in the camera images by the electronic control 5.

According to a further embodiment, the electronic control 5 can evaluate or recognize the state as deviating significantly from the expected state of the vehicle 2 in front if, for example, the camera 7 detects the development of smoke 10 e.g. on a brake actuator of the vehicle 2 in front, as symbolized in the figure. The development of smoke 10 on the brake actuator indicates a reduced braking performance of the vehicle 2 in front, which can lead to unstable driving behavior of the vehicle 2 in front in the event of braking, so that a deceleration of the motor vehicle 1 by means of a correspondingly adapted control signal S is also required here in order to increase the target following distance d₀ .

According to a further embodiment, the electronic control 5 can also evaluate or recognize the state of the vehicle 2 in front as deviating significantly from an expected state of the vehicle in front 2 if, for example, the camera 7 detects that at least one dimension (e.g. width, height, length) of the vehicle in front 2 exceeds a threshold value. This can be the case in particular with vehicles in front 2, which are designed to transport a heavy load and are therefore very wide and high. When following a very large vehicle 2, it can be useful to adjust the control signal S so that an increased target following distance d₀ is set.

Last but not least, with reference to the example in the figure, a relative movement of, for example, a load 11 inadequately secured to a roof rack in relation to the roof rack can be detected by the camera 7 and then analyzed or evaluated by the electronic control 5 as a significant change in the state of the vehicle 2 in front.

As explained above, an activation of at least one lighting device 8 of the vehicle 2 in front can alternatively or also cause an adaptation of the control signal S by the electronic control 5. In particular, the camera 7 can detect an activation of a direction indicator of the vehicle in front 2, and/or an activation of a hazard warning light of the vehicle in front 2, and/or an activation of a brake light of the vehicle in front 2. This is because the activation of such a lighting device 8 or of such lighting devices can represent a critical situation in which an adaptation of the control signal S may be required, for example in order to decelerate the motor vehicle 1 in anticipation.

As explained above, a significant deviation can be detected by the electronic control 5 if at least one threshold value is exceeded, which is stored, for example, in a memory area of the electronic control 5. The threshold value can be fixed or parameterizable, or can also be adapted by the electronic control 5 depending on the speed v and/or acceleration a of the motor vehicle 1 detected by the wheel speed sensors 6, for example. It is also possible to adjust the threshold value as a function of a friction coefficient of the roadway 12 on which the motor vehicle 1 and the vehicle 2 in front are moving. This coefficient of friction of the roadway 12 can be determined, for example, during braking of the motor vehicle 1 by the signals of the wheel speed sensors 6, e.g. depending on an activation of the brake-slip control (ABS) of the motor vehicle 1. Furthermore, it is also possible to adjust the threshold value depending on a visibility range starting from the motor vehicle 1, whereby the visibility range can be detected by the camera 7.

The vehicle's sensor system can generally comprise at least one of the following sensors: as in this case, radar sensors 3, a camera 7 and a GPS receiver 9 for receiving external GPS signals S_{GPS}, but also lidar sensors and/or ultrasonic sensors.

On the basis of received external GPS signals S_{GPS}, the GPS receiver 9 is able to define, for example, the target trajectory 13 on which the motor vehicle 1 and the vehicle in front 2 should move, in particular in autonomous operation, represented here for example by the roadway 12. Alternatively, or additionally, the target trajectory 13 can be defined on the basis of the camera image signal Sk, where this signal represents also a center line and the limits of the roadway 12 and of its lanes. In particular, this target trajectory 13 also represents an expected trajectory of the vehicle in front 2, because it is to be expected that the vehicle in front 2 will move along this target trajectory 13.

A significant deviation of the actual trajectory recorded by the camera 7, for example, from the expected or target trajectory 13 by the vehicle in front 2 can then be detected, in particular transverse to the longitudinal axis of the vehicle in front 2 or in the Y direction, by evaluating the camera signals 7 using the electronic control 5.

In order to be able to detect the significant deviations mentioned, expected values and/or value ranges for the expected dynamic behavior and/or for the expected state of the vehicle in front 2 are stored in the electronic control 5 in particular. The same can also apply to the deactivated/activated state of the lighting device 8 in order to provide a basis for comparison between the activated state and the deactivated state.

### List of reference symbols

- 1: Motor vehicle
- 2: Vehicle in front
- 3: Radar sensors
- 4: Signal conditioning device
- 5: Electronic control
- 6: Wheel speed sensors
- 7: Camera
- 8: Lighting equipment
- 9: GPS receiver
- 10: Smoke development
- 11: Load
- 12: Roadway
- 13: Target trajectory
- 100: following distance control system
- d: Actual following distance
- d₀: Targetfollowing distance
- S: Control signal
- Sd: Distance signal
- Sk: Camera image signal
- S_{GPS}: GPS signal
- X, Y, Z: Coordinate system
- X: X-direction
- Y: Y-direction
- Z: Z-direction

## Claims

1. Following distance control system (100) for a motor vehicle (1), which is designed and set up to control at least one following distance (d) of the motor vehicle (1) in relation to a vehicle in front (2) to a target following distance (d₀ ) without intervention by a driver of the motor vehicle (1), comprising:
a) a sensor system (3, 7, 9) which is designed and set up to detect at least one actual following distance (d) of the motor vehicle (1) in relation to the vehicle in front (2) in a detection range and to generate a distance signal (Sd) as a function thereof,
b) an electronic control (5) which is designed and set up to evaluate at least the distance signal (Sd) and, at least as a function of the latter, to generate a control signal (S) for a drive device and/or a braking device of the motor vehicle (1) in order to regulate the detected following distance (d) to the target following distance (d₀), **characterized in that**
c) the electronic control (5) is furthermore set up and designed in order to take into account, in addition to the distance signal (Sd), at least one further signal (Sk; S_{GPS}) which is generated by the sensor system (3, 7, 9) when generating the control signal (S), the sensor system (3, 7, 9) being set up and designed in order to generate
d) this at least one further signal (Sk, S_{GPS})
d1) depending on a dynamic behavior of the vehicle in front (2), where this dynamic behavior particularly differs from a purely longitudinal dynamic of the vehicle in front (2), and/or
d2) depending on a state of the vehicle in front (2), where this state particularly differs from the dynamic behavior and the purely longitudinal dynamic of the vehicle in front (2), and/or
d3) depending on an activation of at least one lighting device (8) of the vehicle in front (2), and
e) if the taking into account of the further signal (Sk, S_{GPS}) by the electronic control (5) shows that
e1) the dynamic behavior deviates significantly from an expected dynamic behavior of the vehicle (2) in front, and/or
e2) the state deviates significantly from an expected state of the vehicle in front (2), and/or
e3) the at least one lighting device (8) of the vehicle in front (2) has been activated,
f) the electronic control (5) is furthermore set up and designed to adapt the control signal (S).

2. Following distance control system according to claim 1, **characterized in that** the dynamic behaviour deviates significantly from the expected dynamic behaviour when the vehicle in front (2)
a) rotates significantly about its vertical axis (Z), and/or
b) rotates significantly about its longitudinal axis (X), and/or
c) rotates significantly about its transverse axis (Y), and/or
d) deviates significantly from an expected trajectory or target trajectory (13).

3. Following distance control system according to claim 1 or 2, **characterized in that** the dynamic behaviour of the vehicle in front (2) deviates significantly from the expected dynamic behaviour of the vehicle in front (2) if a significant relative movement of a part of the vehicle in front (2) in relation to at least one other part of the vehicle in front (2) is detected by the sensor system (3, 7, 9).

4. Following distance control system according to claim 3, **characterized in that** the significant relative movement represents a detected significant relative movement between a trailer vehicle part in relation to a towing vehicle part of the vehicle in front (2).

5. Following distance control system according to one of the preceding claims, **characterized in that** the electronic control system (5) evaluates the state of the vehicle in front (2) as deviating significantly from the expected state of the vehicle in front (2) if the sensors (3, 7, 9)
a) smoke development (10) on at least one part or section of the vehicle in front (2), and/or
b) at least one dimension of the vehicle in front (2) exceeding a threshold value, and/or
c) a relative movement of a load (11) in relation to a loading surface or to a loading space of the vehicle in front (2) is detected.

6. Following distance control system according to one of the preceding claims, **characterized in that** the activation of the at least one lighting device (8) of the vehicle in front (2) comprises at least the following:
a) activation of a direction indicator of the vehicle in front (2), and/or
b) activation of a hazard warning flasher of the vehicle in front (2), and/or
c) activation of a brake light of the vehicle in front (2).

7. Following distance control system according to one of the preceding claims, **characterized in that** the electronic control (5) adjusts the control signal (S) in such a way that the target following distance (d₀) increases or decreases.

8. Following distance control system according to one of the preceding claims, **characterized in that** the electronic control (5) detects a significant deviation when at least one threshold value stored in the electronic control (5) is exceeded.

9. Following distance control system according to claim 8, **characterized in that** the threshold value
a) is fix value, or
b) is adapted by the electronic control (5) depending on
b1) a speed and/or an acceleration of the motor vehicle (1), and/or
b2) a coefficient of friction of the roadway (12), and/or
b3) a visibility range detected by the sensor system (3, 7, 9) starting from the motor vehicle (1).

10. Following distance control system according to one of the preceding claims, **characterized in that** the sensor system (3, 7, 9) comprises at least the following: A lidar sensor, a radar sensor, an ultrasonic sensor, a camera sensor, a GPS receiver for receiving external GPS signals.

11. Following distance control system according to one of the preceding claims, **characterized in that** in the electronic control (5) expected values and/or value ranges for
a) the expected dynamic behavior, and/or for
b) the expected state of the vehicle in front (2) are stored.

12. Driver assistance system or autopilot system, **characterized in that** it includes a following distance control system according to one of the preceding claims.

13. Driver assistance system or autopilot system according to claim 12, **characterized in that** it is formed by adaptive cruise control (ACC).
